# EUROPEAN PATENT APPLICATION

(11) **EP 3 913 026 A1**
(43) Date of publication of application: **24.11.2021**
(21) Application number: 20740975.6
(22) Date of filing: 17.01.2020
(51) Int. Cl.: C09D 133/00, C09D 183/06, C09D 7/61, C09D 7/63

(54) **SILANE COATING LIQUID COMPOSITION**

(30) Priority: 18.01.2019 JP 2019006636
(71) Applicant: Iwamiya, Yoko, Yokohama-city, Kanagawa 230-0051 (JP)
(72) Inventor: KAWAI Masayoshi, Sano-city, Tochigi 3270000 (JP); SHIBAYAMA Mitsuhiro, Kashiwa-city, Chiba 2770882 (JP); HIROI Zenji, Moriya-city, Ibaraki 3020119 (JP); IWAMIYA Yoko, Yokohama-city, Kanagawa 230-0051 (JP)
(74) Representative: Studio Torta S.p.A.
(86) International application number: PCT/JP2020/001591
(87) International publication number: WO 2020/149413

(57) **Abstract**

[Abstract]

[Problem]

The present invention is to provide a silane-based coating liquid composition capable of imparting various functionalities.

[Means of solving the problems]

The silane-based coating liquid composition of the present invention is characterized by comprising the following Chemical Formula [Chemical Formula 1]: 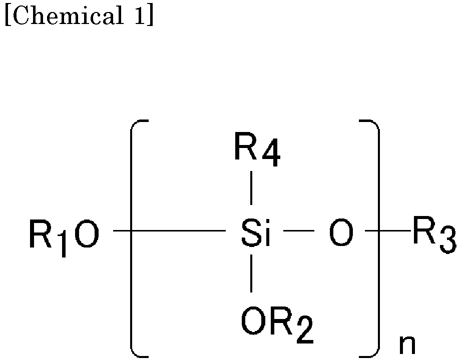 (wherein, in [Chemical Formula 1], R₁, R₂, R₃ and R₄ are hydrogen or an alkyl group having 1 to 4 carbon atoms, which may be the same or different from each other, and n is 2 to 10.) as the main component, a catalyst, a solvent, and an adjusting agent.

## Description

### Technical Field

The present invention relates to a silane-based coating liquid composition, and more particularly relates to a silane-based coating liquid composition that can be used as a coating agent.

### Background Art

Conventionally, various coating liquids have been developed in order to impart various functionality. For example, a coating liquid for improving the properties of a paper material, a coating liquid for the purpose of blocking radiation, and the like have been developed. Except for paraffin paper, cellophane paper, etc., the paper material is weak to water because of the fact that it is paper. Thus, paper which has been known already has a poor water repelling property. If the material is not limited to paper, materials having a light transmitting property and a water repelling property are available and they are prepared, for example, by spreading a plastic material or a vinyl material into a sheet form. In addition, a paper material is much used for houses and dwellings. For example, with regard to a shoji (a paper sliding door) used as a partition for Japanese rooms, there have been used a Japanese shoji paper, rayon shoji paper manufactured by compounding pulp with rayon, polypropylene, etc. in a predetermined ratio, a shoji paper manufactured by subjecting the rayon shoji paper to a laminating treatment with a plastic film, and a shoji paper manufactured by subjecting the surface of Japanese paper to a laminating treatment with an acrylate material or a vinyl chloride material.

As an attempt to further improve while making the best use of the characteristics of these original materials, for example, as an inexpensive impregnating paper having high liquid stability during processing, there is known an impregnated paper in which a silane coupling agent or a composition containing a silane coupling agent, one and more chemicals for improving a paper are dispersed in paper and the water resistance is not lost even when boiling in hot water (Patent Document 1).

### Prior art literature

### Patent literature

Patent literature 1 : JP-A1-H11-315494

### Disclosure of the Invention

### Problems to be resolved by the invention

However, in the prior art including the above patent documents, it is desired to develop a liquid agent having more functionality, although the base material is provided with liquid stability, water resistance and the like. If it is a stable liquid agent, it can be cured and solidified at the desired use to impart a desired application to a base material or the like. Further, for example, if various functions can be imparted to the base material depending on the application, from a rigid material to a flexible material, it is possible to provide a material having high industrial utility value. However, such a coating liquid composition has not been known so far.

Therefore, an object of the present invention is to provide a silane-based coating liquid composition capable of imparting various functionalities.

### Means of solving the problems

In order to achieve the above problems, the present inventor has found the present invention as a result of diligent studies on a modifier for a silane-based coating liquid composition.

That is, a silane-based coating liquid composition of the present invention is characterized by comprising the following Chemical Formula [Chemical Formula 1]: 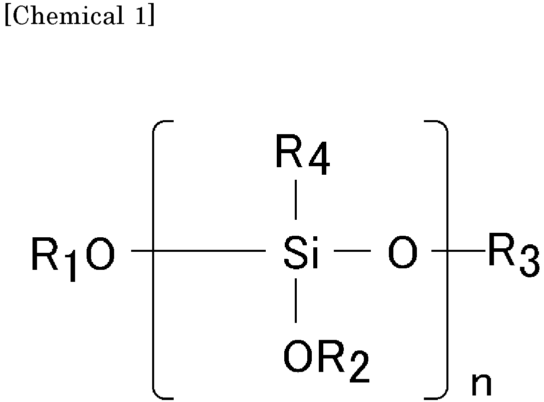 (wherein, in [Chemical Formula 1], R₁, R₂, R₃ and R₄ are hydrogen or an alkyl group having 1 to 4 carbon atoms, which may be the same or different from each other, and n is 2 to 10.) as the main component, a catalyst, a solvent, and an adjusting agent.

Further, in a preferred embodiment of the silane-based coating liquid composition of the present invention, it is characterized in that the adjusting agent is at least one of hydrogen peroxide, acetic acid, and ammonia.

Further, in a preferred embodiment of the silane-based coating liquid composition of the present invention, it is characterized in that the catalyst is an organometallic compound.

Further, in a preferred embodiment of the silane-based coating liquid composition of the present invention, it is characterized in that in addition to the main component, the composition comprises a compound represented by the following Chemical Formula [Chemical Formula 2] having three hydrolyzable substituents and one non-hydrolyzable substituent: 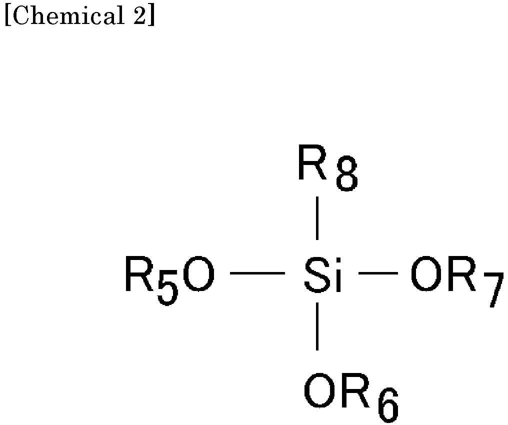 (wherein in [Chemical Formula 2], R₅, R₆ and R₇ may be the same or different from each other, and are monomers composed of hydrogen, alkyl group or alkenyl group, and a bond of R₅O, R₆O and R₇O to Si is an oligomer comprising a siloxane bond, and R₈ is an alkenyl group or a phenyl group which may contain an epoxy group or a glycidyl group in the molecule.).

Further, in a preferred embodiment of the silane-based coating liquid composition of the present invention, it is characterized in that in addition to the main component, the composition comprises a compound represented by the following Chemical Formula [Chemical Formula 3] having two hydrolyzable substituents and two non-hydrolyzable substituent: 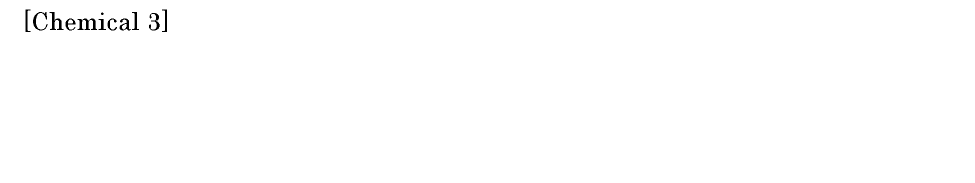 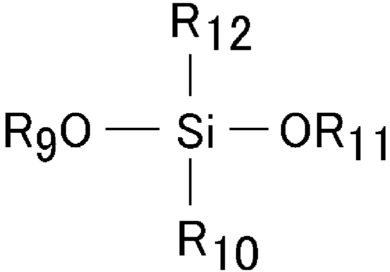 (wherein in [Chemical Formula 3], R₉, and R₁₁ may be the same or different from each other, and are monomers composed of hydrogen, alkyl group or alkenyl group, and a bond of R₉O and R₁₁O to Si is an oligomer comprising a siloxane bond, and R₁₀ and R₁₂ is an alkyl group, an alkenyl group or a phenyl group which may contain an epoxy group or a glycidyl group in the molecule.).

Further, in a preferred embodiment of the silane-based coating liquid composition of the present invention, it is characterized in that the composition further comprises an acrylic resin.

Further, in a preferred embodiment of the silane-based coating liquid composition of the present invention, it is characterized in that the composition has a decomposition function, an antibacterial function, or an adsorption function.

Further, a method of manufacturing functional material of the present invention is characterized by comprising a step of applying the silane-based coating liquid composition of the present invention to a base material and a step of drying the base material to which the coating composition is applied.

Further, a coating material of the present invention is characterized by applying the silane-based coating liquid composition of the present invention to a substrate.

Further, a solidified body of the present invention is characterized by being obtained by solidifying the silane-based coating liquid composition of the present invention.

### Effect of Invention

In the present invention, according to an embodiment using a condensate wherein one of the four substituents of the silicon atom cannot be hydrolyzed and is substituted with the substituent R4 which does not participate in the polycondensation of the compounds, it has an advantageous effect that it is possible to coat a fiber material with the composition to provide appropriate strength and good light transmission, good water repellency and flexibility, and abrasion resistance and flame retardancy (heat resistance) etc.

Further, according to the present invention, as is clear from the description of Examples described later, it has an advantageous effect that it is possible to provide a coat material to which various characteristics as described above are further imparted by taking advantage of the property of having flexibility of fiber materials such as Japanese paper, Western paper, and cloth that are familiar to us. Moreover, it has an advantageous effect that it is possible for practitioner to adjust the various properties imparted to these coating materials relatively freely by arbitrarily selecting and adjusting, for example, the selection and amount of the organometallic catalyst used as the catalyst, the selection and amount of the compounds of [Chemical 2] and / or [Chemical 3], and the coating amount of the coating liquid composition and the like.

Further, in the present invention, it has the advantageous effect that unlike materials that could not be manufactured only by factory production, it is possible to impart strength, light transmission, water repellency, flame retardancy and abrasion resistance while maintaining its flexibility about a base material that is familiar and easily available, such as ordinary paper materials, Further, according to the present invention, it is an advantageous effect that it is possible to optimize the desired functioning by blending the ratios of the main agent, the catalyst and the adjusting agent.

Further, according to the method for producing a functional material of the present invention, it has the advantageous effect that not only the degree of various properties given by the coat film but also the thickness of the coat film can be arbitrarily adjusted, so that the optimum coat material can be manufactured and provided by adjusting the type and amount of each compound as necessary, for example, when using it for products used in places exposed to outdoor wind and rain, or when using it for interior decoration such as wallpaper, Further, according to the present invention, a coating liquid having an ultraviolet resistance property can also be produced, and durability can be maintained by using it on a bench or a pile for outdoor use.

### Brief description of the drawings

[Figure 1]

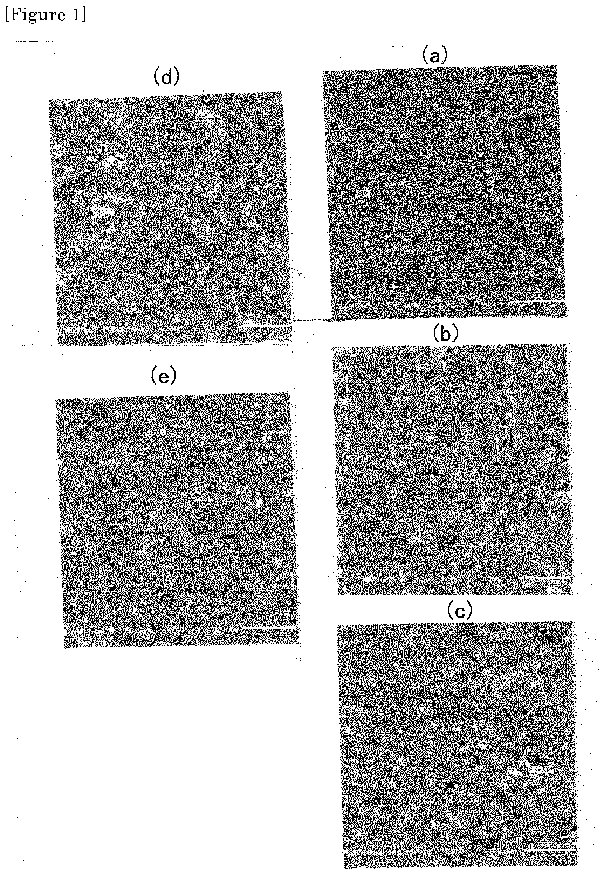

   FIG. 1 shows SEM photographs of No. 2, 3, 5 and 7.
[Figure 2]

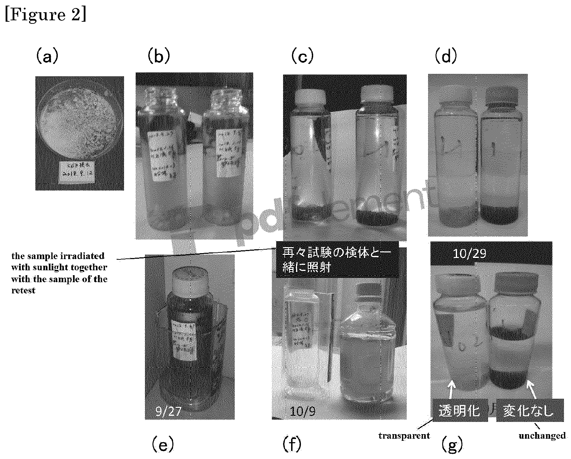

   FIG. 2 is a diagram showing the functionality of a solidified body in one embodiment of the present invention.
[Figure 3]

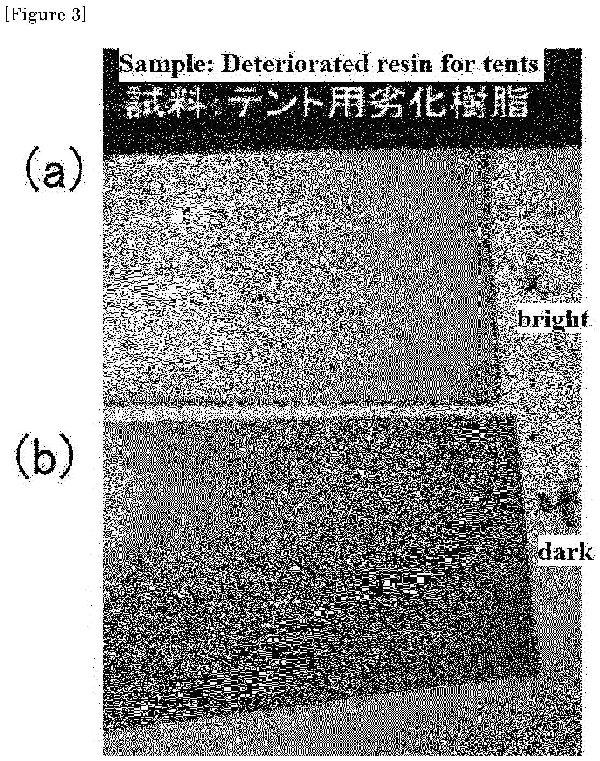

   FIG. 3 is a diagram when an example of the present invention in one embodiment of the present invention is applied to a resin for a tent in a building.
[Figure 4]

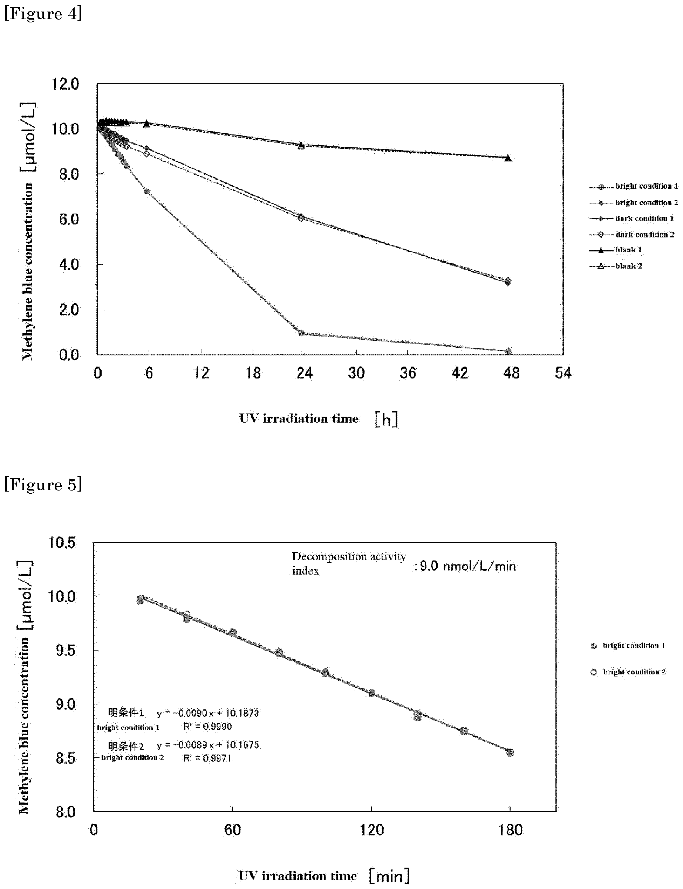

   FIG. 4 is a diagram showing the functionality of a solidified body in one embodiment of the present invention. Although the methylene blue concentration decreased even in the dark condition, the difference from the light condition can be confirmed.
[Figure 5]
   FIG. 5 is a diagram showing the functionality of a solidified body in one embodiment of the present invention. The effect can be also confirmed as a JIS test.
[Figure 6]

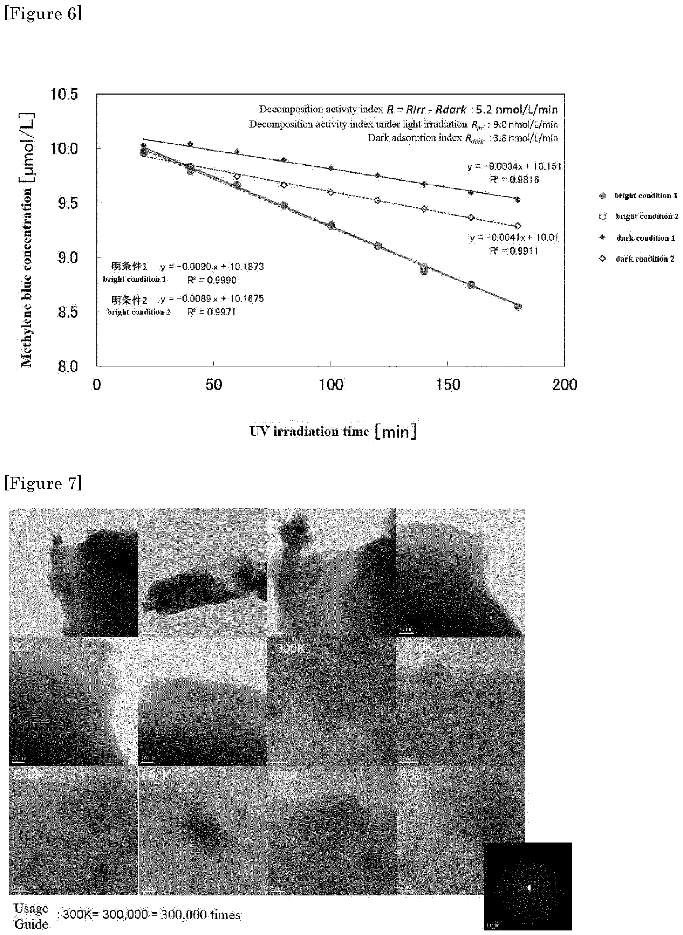

   FIG. 6 is a diagram showing the functionality of a solidified body in one embodiment of the present invention.
[Figure 7]
   FIG. 7 is a diagram showing a micrograph of a solidified body (No. 7) in one embodiment of the present invention. K indicates 1000 times, for example, 300K indicates 300,000 times.
[Figure 8]

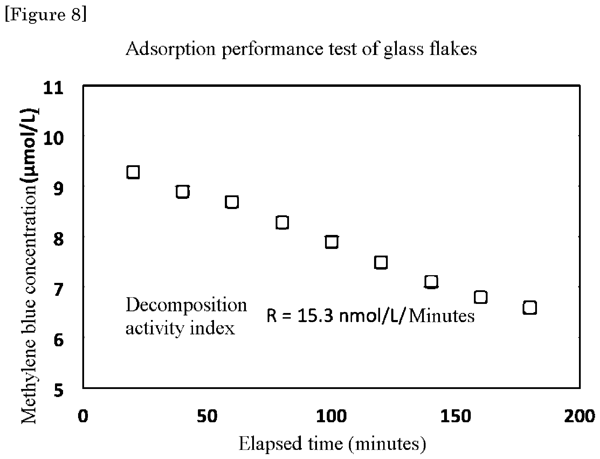

   FIG. 8 is a diagram showing the results of an adsorption performance test of a solidified body (No. 7) in one embodiment of the present invention.

### Mode for Carrying Out the Invention

That is, a silane-based coating liquid composition of the present invention is characterized by comprising the following Chemical Formula [Chemical Formula 1]: 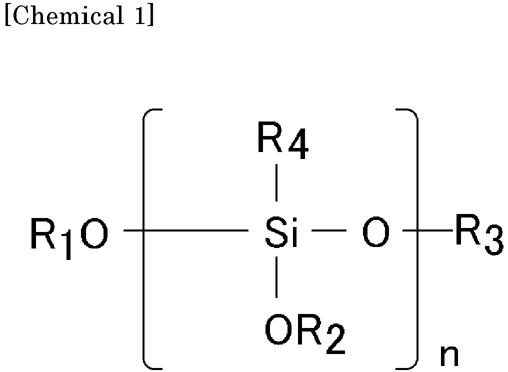 (wherein, in [Chemical Formula 1], R₁, R₂, R₃ and R₄ are hydrogen or an alkyl group having 1 to 4 carbon atoms, which may be the same or different from each other, and n is 2 to 10.) as the main component, a catalyst, a solvent, and an adjusting agent. In the present invention, as shown in [Chemical Formula 1], it is possible to form a compound containing one of the four substituents of the silicon atom substituted with a non-hydrolyzable substituent as a repeating unit. By coating this on a base material such as a fiber material, flexibility can be imparted to the base material. That is, although the number of strong siloxane bonds with the adjacent silicon atom is insufficient by one, unreacted bonds remain in the form of "hanging", so that the flexibility of the coat film can be maintained. And, as a result, the flexibility of the coat material can be maintained.

For example, alkoxysisilane, which is a trifunctional silane that is the main agent of [Chemical Formula 1], is as follows. As an example of the trifunctional silane, mention may be made of methyltrimethoxysilane, ethyltrimethoxysilane, propyltrimethoxysilane, petittrimethoxysilane, methyltriethoxysilane, ethyltriethoxysilane, propyltriethoxysilane, ptylriethoxysilane, methyltriporopoxysilane, ethyltripropoxysilane, vinyl trimethoxysilane, phenyltrimethoxysilane, y- (methacryloxypropyl) trimethoxysilane, y-glycidoxypropyltrimethoxysilane, aminopropyltrimethoxysilane, β- (3,4 epoxycyclohexyl) ethyltrimethoxysilane , methyltriethoxysilane, ethyltriethoxysilane, propyltriethoxysilane, vinyltriethoxysilane, phenyltriethoxysilane, y-(methacryloxypropyl) triethoxysilane, y-glycidoxypropyltriethoxysilane,aminopropyltriethoxysilane, vinyltris (βmethoxyethoxy) silane, and polymers of about 2 to 10 molecules thereof. In addition, these polymers may be polymerized with only one kind of monomer, or may be the one which polymerized two or more kinds of monomers.

In addition, as an example of the tetrafunctional silane, mention may be made of polymers such as tetramethoxysilane, tetraethoxysilane, tetraporoboxysilane, and tetrabutoxysilane. Moreover, it should be noted that these polymers may be obtained by polymerizing only one type of monomer or polymerizing two or more types. The tetrafunctional silane may be a single structure, or mixture of two or more kinds.

Further, R₁, R₂, R₃ and R₄ in [Chemical Formula 1] is hydrogen, or an alkyl group having 1 to 4 carbon atoms, which may be the same or different from each other from the viewpoint that the trifunctional silane and the hydrolyzable organometallic compound react under an organic solvent. Further, n is 2 to 10. In [Chemical Formula 1], the reason why the repetition of the main chain is n = 2 to 10 is that n = 1, that is, when a monomer is used, it takes a long time to polymerize, and it becomes difficult to produce a coated film having sufficient strength in a short time. However, when n is 11 or more, on the contrary, when applied to the fiber material, the number of alkoxy groups and the like for polymerization on the fiber material is insufficient, and it becomes difficult to produce a coat film having sufficient strength. Therefore, in the present invention, a condensate of n = 2 to 10, particularly n = 2 to 8, is preferable.

Moreover, in general, when synthesizing a condensate such as [Chemical Formula 1] from a monomer, it is technically and virtually impossible to accurately control the degree of polymerization. Accordingly, the use of a substance where n is 2-10 or, preferably, n is 2-8 in the invention of the present application means that a coating solution which mainly comprises the substance where n is 2-10 or, preferably, 2-8 in view of distribution of degree of polymerization is used and, therefore, there is no problem even if a substance where n is 11 or more, for example, is contained therein. Such a compound can be obtained by condensing a monomer (for example, methyltrimethoxysilane).

As described above, the raw material (monomer) for obtaining the compound of the Chemical Formula 1 can be purchased at the same low price as compared with tetraalkoxysilane, which is inexpensive but has strong inorganicity. Therefore, by using the compound of the Chemical Formula 1, it is possible to produce a coating material having a film having sufficient organic properties and sufficient strength without using an expensive so-called silane coupling.

As examples of the compound represented by the Chemical Formula 1, specifically, mention may be made of a condensate such as methyltrimethoxysilane, ethyltrimethoxysilane, propyltrimethoxysilane, butyltrimethoxysilane, methyltriethoxysilane, ethyltriethoxysilane, propyltriethoxysilane, and butyltri ethoxysilane, methyltripropoxysilane, and ethyltripropoxysilane and the like. Moreover, the compound of the Chemical Formula 1 may be a condensed product of only one type of the monomer, or may be a condensed product of two or more types of the above-exemplified monomers.

Moreover, although the primitive role of the unhydrolyzable substituent (R4) in the compound of the Chemical Formula 1 is to give a softness to a coated layer, if a water repelling property is to be given to the coated layer as well, R4 is an alkyl group. Generally, in an organic substituent, the more the carbon numbers, the more the organic property or the water repelling property but, when the carbon numbers are too much, strain is resulted in the coated layer due to a steric hindrance causing a deterioration in the layer strength. Accordingly, it is preferred to decide the carbon numbers of the alkyl group and also the type and the quantity of each monomer constituting the compound (condensate) of the Chemical Formula 1 by carrying out a preliminary manufacturing test, etc. by referring to the Examples, etc. of the specification of the present application. Incidentally, it is also possible to give a water repelling property to the coated layer by adding a compound of the Chemical Formula 2 or 3 which will be mentioned later and, therefore, it is not essential that R4 in the compound of the Chemical Formula 1 is an alkyl group.

Further, in the present invention, the content of the compound shown in the Chemical Formula 1 is not particularly limited, but the content of the compound shown in the Chemical Formula 1 is preferably 20 to 70% by weight, more preferably 30 to 50% by weight, in terms of organoalkoxysilane. If it is 10% by weight or less, there is possibility that the effect as a binder may be reduced. In addition, when no other additive is considered, it may be 50% by weight or more.

Further, the catalyst in the present invention is not particularly limited. As the catalyst, for example, mention may be made of an organic metal compound, from the viewpoint that both the element of the main agent and the element of the catalyst cause a sol-gel reaction, so that the element of the main agent (Si (silicon)) can support the element of the catalyst well, and it is possible to achieve the function of the catalyst without the element of the catalyst affecting the coated base material directly.

When the organometallic compound is mixed with the compound of the Chemical Formula 1 to form a coating liquid composition and applied to a fiber material such as paper, the coating liquid composition absorbs the moisture of the paper or the moisture in the air, and the organometallic compound hydrolyzes itself. At this time, the organometallic compound can be formed a network with the compound of the Chemical Formula 1, and the compound of the Chemical Formula 1 can be cured and solidified. As examples of the organometallic compound preferably used in the present invention, mention may be made of those containing titanium, zircon, aluminum or tin. More specifically, mention may be made of tetrapropoxytitanate, tetrabutoxytitanate, tetrapropoxydilconate, tetrabutoxydilconate, tripropoxyamnate, aluminum acetylacetonate, dibutyltin diacetate, dibutyltin dilaurate and the like.

Further, in the present invention, the content of the catalyst is not particularly limited, but from the viewpoint of enabling hydrolysis and polycondensation reaction to occur in order to cure and solidify the silane-based coating liquid as the main agent, the content of the catalyst can be preferably 1 to 10% by weight, more preferably 3 to 7% by weight.

Moreover, as the catalyst for curing and solidifying the compound represented by the Chemical Formula 1, a catalyst which is generally used can be used without any special limitation. For example, in the case of an acid catalyst, mention may be made of hydrochloric acid, nitric acid, sulfuric acid, phosphoric acid, formic acid, acetic acid and the like. As examples of the base catalyst, mention may be made of ammonia, tetramethylammonium hydroxide, 2-hydroxyethyltrimethylammonium hydroxide, ethanolamine, diethanolamine, triethanolamine and the like. When these ordinary catalysts are used, reaction water is allowed to coexist in order to cure and solidify the compound of Formula 1.

The coating liquid composition provided by the present invention can thus contain the compound of the Chemical Formula 1, the catalyst and the reaction water. There is no particular problem in normal use, but when this is stored for a long period of time, there arises a problem that the coating liquid is easily gelled by the reaction water. In order to solve this, it is preferable to use a hydrolyzable organometallic compound as a catalyst instead of the usual catalyst as described above. If a hydrolyzable organometallic compound is used, it is not necessary for the reaction water to coexist, which becomes preferable because of long-term storage stability.

Further, a solvent may be added to the coating solution of the present invention so that the compound of the Chemical Formula 1, the catalyst and the reaction water which is needed in some cases are homogeneously mixed. As examples of the solvent such as an organic solvent used for such an object, mention may be made of alcohol compounds. To be more specific, mention may be made of methanol, ethanol, propanol, isopropanol, butanol, pentanol and hexanol. Further, it is also possible to adjust the viscosity and the drying speed of the coating solution by controlling its adding amount.

With an object of such a control, it is particularly preferred to use an organic solvent having high viscosity and boiling point such as glycols, for example, such as ethylene glycol, propylene glycol, diethylene glycol, polyethylene glycol, dipropylene glycol and polypropylene glycol and cellosolves, for example, such as methoxyethanol, propoxyethanol, butoxyethanol, methoxypropanol, ethoxypropanol, propoxypropanol and butoxypropanol alone or in combination of two or more. It goes without saying that the already-mentioned alcohols may be added together with the above-mentioned one or more organic solvent(s) having high viscosity and boiling point. Moreover, when an object is to adjust the viscosity and the drying speed of the coating solution, the same effect can be achieved not only by the above-mentioned organic solvent but also by a surface-active agent.

Especially in the case of the above-mentioned glycols and cellosolves, they have hydroxyl groups in a molecule and, therefore, they may be introduced into a network of the siloxane bond formed by the condensation reaction of the compound of the Chemical Formula 1. Since glycols and cellosolvs have an organic property, there is an increase in the organic property of the resulting coated layer or, in other words, there is an increase in the organic property of the coated material as a result of such an introduction.

Further, in the present invention, the content of the solvent is not particularly limited, but from the viewpoint of the base material, function, and appropriate concentration, the content of the solvent can be preferably 2 to 95% by weight, more preferably 25 to 50% by weight.

Further, in a preferred embodiment of the silane-based coating liquid composition of the present invention, from the viewpoint that the functions originally possessed by the compound constituting the main agent and the catalyst can be effectively imparted, it is characterized in that the adjusting agent is at least one of hydrogen peroxide, acetic acid, and ammonia. As the adjusting agent, a weakly acidic or basic catalyst can be used, and for example, at least one of acetic acid, hydrogen peroxide, and ammonia can be used. The adjusting agent can be said to be a second catalyst, but the present inventors have found that by adding it, it is possible to create a new function such that a new element sequence is generated. This adjusting agent is completely different from the action and function of strong acids and a large amount of water (H2O) used in the conventional sol-gel method.

That is, although most of the matters are unsolved, surprisingly, the present inventors have found that by adding an adjusting agent such as an acid group, the function originally possessed by the compound constituting the added metal catalyst can be efficiently expressed. Specifically, for example, as will be apparent in Examples described later, for example, an organometallic compound such as tetrabutoxytitanium is used as a catalyst, and it can be founded that the action of the adjusting agent makes it possible to succeeded in synthesizing titanium oxide having an adsorption and a decomposition function possessed by the compounds constituting the catalyst, and were able to find a composition capable of containing the functional component in a liquid state.

In the present invention, the content of the adjusting agent is not particularly limited, but from the viewpoint of secondary function expression, the content of the adjusting agent can be preferably 0.5 to 5% by weight, more preferably 1 to 2% by weight.

Further, in a preferred embodiment of the silane-based coating liquid composition of the present invention, it is characterized in that in addition to the main component, the composition comprises a compound represented by the following Chemical Formula [Chemical Formula 2] having three hydrolyzable substituents and one non-hydrolyzable substituent: 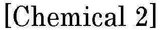 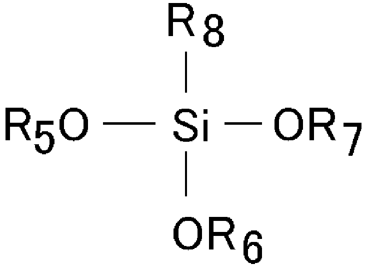 (wherein in [Chemical Formula 2], R₅, R₆ and R₇ may be the same or different from each other, and are monomers composed of hydrogen, alkyl group or alkenyl group, and a bond of R₅O, R₆O and R₇O to Si is an oligomer comprising a siloxane bond, and R₈ is an alkenyl group or a phenyl group which may contain an epoxy group or a glycidyl group in the molecule.)

In the present invention, by using a coating liquid containing the compound of the Chemical Formula 2 in addition to the compound of the Chemical Formula 2, the organic properties and the like possessed by the compound of the Chemical Formula 2 can be newly added, or properties such as organic properties can be increased compared with the coating material produced without using the compound of the Chemical Formula 2. The compound of the Chemical Formula 2 added for this purpose is a compound consisting of three of the four substituents which are hydrolyzable and the remaining one which is non-hydrolyzable.

In the Chemical Formula 2, R₅, R₆ and R₇ may be the same or different, respectively, and are monomers composed of hydrogen or an alkyl group or an alkenyl group having 1 to 10 carbon atoms, and the bond of R₅O, R₆O and R₇O to Si is an oligomer composed of a siloxane bond, and R₈ is an alkyl group, an alkenyl group or a phenyl group having 1 to 10 carbon atoms, which may contain an epoxy group or a glycidyl group in the molecule.

In the present invention, as examples of the compound represented by the Chemical Formula 2, specifically, mention may be made of vinyltrimethoxysilane, phenyltrimethoxysilane, γ- (methacryloxypropyl) trimethoxysilane, γ-glycidoxypropyltrimethoxysilane, Aminopropyltrimethoxysilane, β- (3,4 epoxycyclohexyl) ethyltrimethoxysilane, vinyltriethoxysilane, phenyltriethoxysilane, - (methacryloxypropyl) triethoxysilane, γ-glycidoxypropyltriethoxysilane, Examples thereof include aminopropyltriethoxysilane, vinyltris (βmethoxyethoxy) silane etc., and condensates of about 2 to 10 molecules thereof.

Incidentally, the compound of the Chemical Formula 2 may be two or more kinds of such monomers. When a condensate of two or more molecules is used as the compound of the Chemical Formula 2, that may be a condensate of two or more kinds of such monomers.

Further, in a preferred embodiment of the silane-based coating liquid composition of the present invention, it is characterized in that in addition to the main component, the composition comprises a compound represented by the following Chemical Formula [Chemical Formula 3] having two hydrolyzable substituents and two non-hydrolyzable substituent: 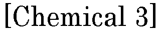 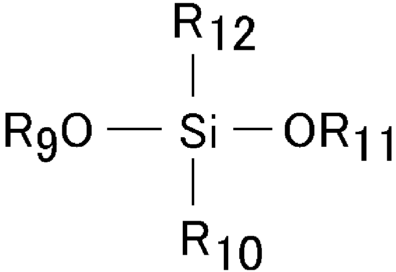 (wherein in [Chemical Formula 3], R₉, and R₁₁ may be the same or different from each other, and are monomers composed of hydrogen, alkyl group or alkenyl group, and a bond of R₉O and R₁₁O to Si is an oligomer comprising a siloxane bond, and R₁₀ and R₁₂ is an alkyl group, an alkenyl group or a phenyl group which may contain an epoxy group or a glycidyl group in the molecule.).

Further, in the present invention, it is also possible that a coating solution composition to which a compound of the Chemical Formula 3 is further added is used in addition to a coating solution composition containing a compound of the Chemical Formula 1 or a coating solution composition containing both compounds of the Chemical Formulae 1 and 2 whereby a property of the compound of the Chemical Formula 3 such as an organic property is newly given or a property such as an organic property is potentiated as compared with a coated material which is manufactured without the use of it.

The compound of the Chemical Formula 3 is a compound consisting of two of the four substituents which are hydrolyzable substituents and the other two which are non-hydrolyzable substituents. In the Chemical Formula 3, R₉ and R₁₁ may be the same or different, respectively, and are monomers composed of hydrogen or an alkyl group or an alkenyl group having 1 to 10 carbon atom(s), and a bond of R₉O and R₁₁O to Si is an oligomer comprising a siloxane bond, and R₁₀ and R₁₂ is an alkyl group, an alkenyl group or a phenyl group having 1 to 10 carbon atom(s) which may contain an epoxy group or a glycidyl group in the molecule.

As examples of the compound represented by the Chemical Formula 3, specifically, mention may be made of dimethyldimethoxysilane, dimethyl diethoxysilane, diethyldimethoxysilane, diethyldiethoxysilane, diphenyldimethoxysilane, diphenyldiethoxysilane, methylvinyldimethoxysilane, and methylvinyldiethoxysilane, etc., and condensates of about 2 to 10 molecules thereof. Moreoveer, the compound of the Chemical Formula 3 may be two or more kinds of such monomers, and even when a condensate of two or more molecules is used, it may be a condensate of two or more kinds of such monomers.

When any of the compounds of the Chemical Formula 2 and the Chemical Formula 3 as mentioned above is added to a coating solution composition, it is possible to increase an organic property of the coated layer coating film while, when both compounds of the Chemical Formulae 2 and 3 are added to the coating solution composition, the organic property of the coating film can be further improved and, as a result, a water repelling property, etc. of the coated material can be further improved as well.

It is preferred that, in general, the compound of the Chemical Formula 2 and/or the compound of the Chemical Formula 3 are/is added to the coating solution composition in such an amount that the total amount does not exceed 50% of the compound of the Chemical Formula 1 which is the main component of the coating solution composition. When the total adding amount exceeds that range, bonding with the compound of the Chemical Formula 1 which is the main component does not well take place when the coating solution composition is applied to a fiber material whereby there is possibility that the strength of the coated layer is insufficient. Accordingly, in the case of actual addition of the compound of the Chemical Formula 2 and/or the compound of the Chemical Formula 3, it is recommended that, taking the fact that the strength of the coated layer lowers depending upon the adding amount into consideration, the addition is kept minimum after elucidating the adding amount by which the object can be achieved as a result of a preliminary manufacturing test, etc. by referring to the Examples of the specification of the present application.

Moreover, the primary role of the unhydrolyzable substituents (R8, R10 and R12) in the compound of the Chemical Formula 2 and the compound of the Chemical Formula 3 is to give softness to the coated layer and, since they are organic substituents such as an alkyl group, they also play a role of giving a water repelling property to the coated layer. Generally, in the organic substituents, the more the carbon numbers, the more the organic property or the water repelling property while, when the carbon numbers are too many, a strain is resulted in the coated layer due to a steric hindrance causing a lowering of the strength of the layer. Accordingly, it is recommended that the carbon numbers of the organic substituent and the type and the quantity of each of the monomers constituting the compound of the Chemical Formula 2 and/or the compound of the Chemical Formula 3 (condensate) are decided after carrying out a preliminary manufacturing test, etc. by referring to the Examples, etc. of the specification of the present application.

A siloxane bond which has a strong resistance to heat and to abrasion is, on the other hand, the so-called "hard" bond as well. Due to the said "hardness", it is possible to give a resistance to abrasion to a fiber material such as paper upon application to the said material. However, a fiber material such as paper is characteristic by its softness and a coated material is sometimes requested to have the softness as same as paper, etc. which is a material therefor.

In a sol-gel coating solution which has been commonly used already, tetraalkoxysilane (Si(OR)4) or an oligomer thereof is used as a starting material. When a coated layer is formed by its complete hydrolysis reaction ((1) to (3) in a Reaction Formula 1 described later), all of the four bonds of silicon atom form a network of a hard siloxane bond giving a layer which is as hard as ceramics but is fragile without softness and, therefore, it has been practically impossible to manufacture a coated material where the softness of paper, etc., may be well utilized.

According to the present invention, however, a compound of the Chemical Formula 1 where one of the four substituents for silicon atom is not hydrolyzable is used as a main component of the coating solution composition whereby the above problem is solved. Moreover, according to the present invention, a compound of the Chemical Formula 2 and the compound of the Chemical Formula 3 having one and two unhydrolyzable substituent(s) respectively are added to the coating solution composition whereby it is possible to further increase the softness, etc.

Further, in a preferred embodiment of the silane-based coating liquid composition of the present invention, it is characterized in that the composition further comprises an acrylic resin.

In the present invention, the acrylic resin is not particularly limited, and for example, those obtained by radical copolymerizing an acrylic monomer and another monomer copolymerizable with the acrylic monomer can be used.

Among these, the acrylic monomer is not particularly limited, but is, for example, mention may be made of an alkyl group-containing (meth) acrylic based monomers such as methyl (meth) acrylate (indicating that it is either methyl acrylate or methyl methacrylate. The same shall apply hereinafter), ethyl (meth) acrylate, n-butyl (meth) acrylate, i-butyl (meth) acrylate, 2-ethylhexyl (meth) acrylate, cyclohexyl (meth) acrylate and the like; a hydroxyl group-containing (meth) acrylic based monomer such as 2-hydroxyethyl (meth) acrylate and the like; an ethylenically unsaturated carboxylic acid such as (meth) acrylic acid and the like; an amino group-containing (meth) acrylic based monomer such as dimethylaminoethyl (meth) acrylate, dimethylaminopropyl (meth) acrylate and the like; an amide-containing (meth) acrylic based monomer such as (meth) acrylamide, ethyl (meth) acrylamide and the like; a nitrile group-containing (meth) acrylic based monomer such as acrylonitrile and the like: an epoxy group-containing (meth) acrylic based monomer such as glycidyl (meth) acrylate and the like.

As other monomers copolymerizable with acrylic monomers, mention may be made of aromatic hydrocarbon-based vinyl monomers such as styrene, methylstyrene, chlorostyrene, vinyltoluene and the like; an ethylene unsaturated carboxylic acid such as maleic acid, itaconic acid, crotonic acid, fumal acid, citraconic acid and the like; sulfonic acid-containing vinyl monomers such as styrene sulfonic acid, vinyl sulfonic acid and the like; acid anhydrides such as maleic anhydride, itaconic anhydride and the like; chlorine-containing monomers such as vinyl chloride, vinylidene chloride, chloroprene and the like; hydroxyl-containing alkyl vinyl ethers such as hydroxyethyl vinyl ethers, hydroxypropyl vinyl ethers and the like; alkylene glycol monoallyl ethers such as ethylene glycol monoallyl ethers and propylene glycol monoallyl ethers, diethylene glycol monoallyl ethers and the like; α-olefms such as ethylene, propylene, isobutylene and the like; vinyl esters such as vinyl acetate, vinyl propionate, vinyl butyrate, vinyl pivalate and the like; vinyl ethers such as methyl vinyl ether, ethyl vinyl ether, butyl vinyl ether, cyclohexyl vinyl ether and the like; allyl ethers such as ethyl allyl ether, butyl allyl ether and the like.

The acrylic resin is obtained, for example, by an emulsion polymerization method. The method of emulsion polymerization is not particularly limited, and according to conventionally known methods, an acrylic resin emulsion can be produced by polymerizing a monomer in a dispersion system containing an agent component as a basic composition component such as the above-mentioned monomer, chain transfer agent, surfactant, radical polymerization initiator, and other additions used as necessary in an aqueous medium.

In the present invention, the acrylic resin is 10 to 30% by weight, preferably 25 to 30% by weight, in terms of solid content, based on the total amount of the composition of the present invention. If it is less than 10% by weight, the obtained coating film becomes hard and tends to be in a crunchy state, while if it exceeds 30% by weight, the coating film is soft, but when a functional component is added, there is possibility that the addition amount is reduced, and this may reduce the functionality of the component.

Further, in a preferred embodiment of the silane-based coating liquid composition of the present invention, the composition is characterized by having a decomposition function, an antibacterial function, or an adsorption function.

Moreover, the silane-based coating liquid composition of the present invention can be safely stored in a sealed state by low-temperature storage or the like. That is, a stable liquid composition can be obtained even in a state containing the compound of Chemical Formula 1, a catalyst, an adjusting agent, and the like. It is possible to carry out a reaction / polycondensation reaction by using OH groups (moisture / water) in the air or OH groups (internal moisture) of the base material when coating. It is also one of the features of the present invention that it is a stable coating liquid composition.

The major difference from glass production method according to the conventional sol-gel method is that it is not necessary or essential to add a large amount of water or acid catalysts such as sulfuric acid, nitric acid, phosphoric acid, and hydrochloric acid. The glass of sol-gel is a strong alkali, but the glass of coating agents No. 1 to 17 of the examples described later is weak acid to neutral, so safe glasses that do not burden the human body or the environment can be generated.

As described above, one of the important features of the coating liquid composition of the present invention is that even if a catalyst is added, it does not cure or solidify unless it comes into contact with moisture in the air or reacts with the moisture of the base material. If it is sealed, it can be a coating liquid composition that can be easily applied at any time, and it is inexpensive. That is, since the present invention is a liquid agent having good wettability, it is possible to apply fine details to form a film even in a complicated shape to exert a desired function.

Moreover, the coating liquid composition of the present invention may be solidified as it is and used, or may be applied to a base material and used as described later.

Further, the method for producing a functional material of the present invention is characterized by comprising a step of applying the silane-based coating liquid composition of the present invention to a base material and a step of drying the base material to which the coating composition is applied. Regarding the silane-based coating liquid composition, the above-mentioned description of the silane-based coating liquid composition of the present invention can be directly applied to the method for producing a functional material.

In the present invention, the base material to be coated is not particularly limited. For example, fabrics such as knitted fabrics, woven fabrics, non-woven fabrics, and paper, films, sheets, and the like can be mentioned. Specifically, mention may be made of in addition to fabrics and films made of polyamide fibers, polyester fibers, rayon fibers, cotton, pulp, etc.; Japanese paper, copy paper, typec (polyethylene non-woven fabric manufactured by DuPont), wallpaper, fusuma paper, obstacle paper, ceiling paper, table cloth, curtains, mats, rubber sheets, etc. In addition to the above-mentioned paper and the like, examples of the base material may include trees, wood products, and buildings. Furthermore, since the siloxane bond can also be made of an inorganic substance, as the base material, mention may be made of metals, concrete, carbon compounds, glass and their products.

For coating the substrate with the composition of the present invention, coating means such as brush coating, spraying, dipping, roll coating, and printing can be used. A coating film having a desired dry film thickness can be formed with a single coating, and can be further applied 2 to 5 times. Further, in the case of recoating, the heating / drying treatment may be performed each time.

When the composition of the present invention is coated on a substrate, (a) a polycondensation reaction can occur at the same time as hydrolysis of organoalkoxysilane at a temperature of room temperature to 60 ° C to form a sol, and the reaction further can proceed to become a gel, that is, an organopolysiloxane. By leaving this at room temperature for 1 to 6 days or heating it at 80 to 150 ° C for 10 to 60 minutes, the organopolysiloxane and, in some cases, the acrylic resin can be co-condensed with the volatilization of the solvent. When a component of functionality is further contained, a cured coating film in which the component is compounded can be formed. However, the reaction temperature and the standing or heating time are not limited to the above because they differ depending on the type and blending ratio of each component used.

In the method for producing a functional material according to the present invention, first, an arbitrary fiber material can be cut and processed into an arbitrary size and shape, and the coating liquid composition of the present invention described above can be applied thereto. The specific coating method is not particularly limited, but this can be done, for example, by immersing the fiber material in the coating liquid, smearing the coating liquid on the fiber material, or spraying the coating liquid on the fiber material. Further, as the coating method, for example, cloth printing, brush coating, roller method, spraying method, dipping method, gravure printing machine coating method, absolute drying method and the like can be used.

Also, the drying process is not particularly limited. For example, the liquid agents Nos. 1 to 17 of Examples described later can be basically cured and solidified by natural drying (environmental temperature / environmental humidity). Heating is effective when the reaction is promoted quickly in time and the hardening / solidification film formation is promoted.

In the present invention, for example, it is possible to manufacture functional materials such as a coated material using a fiber material made of bark fibers that have been strained and dried, handmade high-grade Japanese paper, machine-made plain Japanese paper, Western paper or Japanese paper, etc., fiber using non-laying cloth, ordinary cloth, etc. Moreover, the fiber material is subjected to a predetermined pretreatment prior to the application of the coating liquid composition so that the bond between the fiber material surface and the coating film can be strengthened in comparison with those of not being subjected to the pretreatment.

As an example of this pretreatment, for example, a pretreatment can be exemplified that a base material such as a fiber material is immersed in high-purity isopropyl alcohol of about 98% for about 30 minutes, then left at a high temperature of about 100 °C to be completely dried, and then irradiated with ultraviolet rays for about 30 minutes. As described above, when the coating liquid composition is applied to a base material such as a fiber material which has been subjected to a predetermined pretreatment or has not been subjected to a predetermined pretreatment, the compound of Chemical Formula 1 is hydrolyzed, and a siloxane bond (Si—O—Si) is formed through the reaction shown in (1) to (3) of the following reaction formula 1.

Reaction formula 1:

(1) Si-OR + H2O → Si-OH + ROH (2) Si-OH + HO-Si → Si-O-Si + H2O (3) Si-OH + RO-Si → Si-O-Si + ROH

The binding energy of Si — O in the siloxane bond (Si — O — Si) thus generated is 106 kcal / mol. On the other hand, the binding energy of the CC bond, which is a typical bond of an organic compound, is 82.6 kcal / mol. Therefore, it can be seen that the vitreous coat film having a siloxane bond, which is formed by hydrolysis of the compound of Chemical Formula 1, has a much more thermally stable bond than the organic compound. Due to this thermally stable bond, the coat film formed by the present invention has excellent heat resistance and abrasion resistance, and as a result, a coating material having excellent heat resistance and abrasion resistance can be produced.

Further, when the coating liquid composition of the present invention contains the above-mentioned organometallic compound (for example, tetrabutoxytitanium) as a catalyst, even if the coating liquid does not contain reaction water, (1) to (3) in the above reaction formula 1 proceed, and the reaction in this case is as shown in (4) and (5) in the following reaction formula 2 in detail.

Reaction formula 2:

(4) Ti-OR + H2O → Ti-OH + ROH (5) Ti-OH + RO-Si → Ti-O-Si

As described above, by introducing the Ti-O bond into the coating film, the heat resistance and abrasion resistance can be further improved as compared with the coating film containing only the siloxane bond. As described above, when the organometallic compound is used as the catalyst, not only the reaction water does not need to coexist, but also the heat resistance and wear resistance of the coat film are further improved, and as a result, the heat resistance the wear resistance of the coat material can be made even stronger.

The present invention further comprises the adjusting agent (modifier), but as described above, it has been found by the present inventors that the present invention makes it possible to use the sol-gel reaction of both the main agent and the catalyst with the addition of the adjusting agent as needed without using a general sol-gel method of adding a large amount of water, acid, or base, and as a result of this, it is possible to provide a novel functional material capable of stably exerting the original functions of the elements of the main agent and the catalyst contrary to the conventional technical common sense.

Further, a coating material of the present invention is characterized by applying the silane-based coating liquid composition of the present invention to a substrate. Further, a solidified body of the present invention is characterized by being obtained by solidifying the silane-based coating liquid composition of the present invention. For the silane-based coating liquid composition, the base material, the coating, and the solidification method of the present invention, the above-mentioned description of the silane-based coating liquid composition of the present invention or the method for producing or the functional material of the present invention can be referred to as it is.

### Example

Hereinafter, the present invention will be described in more detail based on Examples, but Examples are merely examples, and the present invention is not construed as being limited to those Examples. Further, needless to say, it can be appropriately changed without departing from the gist of the present invention.

### Example 1-16

### Production of Alkoxysilane Condensate

A methyltrimethoxysilane condensate was synthesized as follows.

181 g of methyltrimethoxysilane, 50 g of methanol and 18 g of pure water were added to a 500 ml three-necked flask and stirred thoroughly. Further, 2 g of 61% nitric acid was added, and the mixture was heated and recirculated for 3 hours with stirring. After completion of the reaction, the pressure inside the reaction vessel was reduced while heating to remove methanol. The methyltrimethoxysilane thus obtained was mainly trimer to tetramer by gas chromatography analysis.

Next, the coating liquid composition was prepared and the functional material (coating material) was manufactured. Using the alkoxysilane condensate synthesized as described above, 16 kinds of functional materials of the present invention shown in Table 1 containing these as main components were prepared (the unit of mixed weight is g). Further, in Table 1, regarding the main compounding agent A, specifically, No. 1 to 7 and 11 to 14 are methyltrimethoxysilane (trifunctional), and No. 8 to 10 are tetraethoxysilane oligomers (tetrafunctional). Further, regarding the compounding agents B and C, specifically, No. 5 to 7 are tetraethoxysilane oligomers (tetrafunctional), and Nos. 12, 15 and 16 are polyalkylalkoxysilanes (trifunctional) (In No.15, Ti powder is used as a modifier to improve adhesiveness). Further, regarding the organic solvent, specifically, No. 1 to 11 and 14 to 16 are isopropyl alcohol, and No. 12 and 13 are ethyl acetate. Further, regarding the reaction accelerator (catalyst), specifically, No. 1 to 16 are tetrabutoxytitanium. Further, function 1 indicates water repellency, function 2 indicates flame retardancy, function 3 indicates light transmission, function 4 indicates decomposition, antibacterial, antifouling, adsorption, and function 5 indicates adhesion, respectively.
The sources of the ingredients used are as follows.
■ Acrylic ester polymer (Toagosei Co., Ltd.)
■ Tetraethoxysilane oligomer (Tama Chemical Industry Co., Ltd.)
■ Polymethylphenylsiloxane (Shin-Etsu Chemical Co., Ltd.)
■ Tetramethoxysilane oligomer (Mitsubishi Chemical Corporation)
■ Acrylic acid ester copolymer (Toagosei Co., Ltd.)
■ Polyalkylalkoxysilane (Shin-Etsu Chemical Co., Ltd.)
■ Polymethyl hydrogen siloxane (Merck)
■ Isopropyl alcohol (Sankyo Chemical Industry Co., Ltd.)
■ Ethyl acetate (Showa Denko KK)
■ Tetrabutoxytitanium (Nippon Soda Corporation)

**[Table 1]**

| Coat liquid | Main compounding agent A | Mixed weight | Compounding agent B, C | Mixed weight | Solvent name | Mixed weight | Reaction accelerator | Mixed weight | Modifier (Adjusting agent) | Mixed weight | Solidified body formation% | Liquid viscosity | Function1 | Function2 | Function3 | Function4 | Function5 | |
|---|---|---|---|---|---|---|---|---|---|---|---|---|---|---|---|---|---|---|
| No.1 | Trifunctional silane | 6 | Polymethylphenylsiloxane | 2 | Organic solvent | 6.8 | Metal alkoxide | 02 | | | 30 ∼ 33 | 3∼6cP | Ⓞ | ○ | ○ | | | |
| 2 | Trifunctional silane | 11 | | | Organic solvent | 3.4 | Metal alkoxide | 0.6 | | | 30 ∼ 33 | 2∼5cP | Ⓞ | ○ | Ⓞ | | | |
| 3 | Trifunctional silane | 7 | | | Organic solvent | 7 | Metal alkoxide | 08 | H₂O₂ | 024 | 30 ∼ 33 | 2∼5cP | Ⓞ | ○ | Ⓞ | | | |
| 4 | Trifunctional silane | 7 | | | Organic solvent | 7 | Metal alkoxide | 08 | CH₃COOH | 024 | 30 ∼ 33 | 2~5cP | Ⓞ | ○ | Ⓞ | | | |
| 5 | Trifunctional silane | 4 | Tetrafunctional silane | 2.5 | Organic solvent | 6.8 | Metal alkoxide | 1.6 | | | 31 | 3∼7cP | Ⓞ | Ⓞ | ○ | | | |
| 6 | Trifunctional silane | 4 | Tetrafunctional silane | 25 | Organic solvent | 68 | Metal alkoxide | 16 | H₂O₂ | 02 | 31 | 3∼7cP | Ⓞ | Ⓞ | Ⓞ | | | |
| 7 | Trifunctional silane | 4 | Tetrafunctional silane | 2.5 | Organic solvent | 68 | Metal alkoxide | 1.6 | CH₃COOH | 02 | 31 | 3∼7cP | Ⓞ | Ⓞ | Ⓞ | Ⓞ | | |
| 8 | Tetrafunctional silane | 7.2 | | | Organic solvent | 7.2 | Metal alkoxide | 0.6 | | | 20 | 2∼7cP | Ⓞ | Ⓞ | Δ | | | |
| 9 | Tetrafunctional silane | 7.2 | | | Organic solvent | 72 | Metal alkoxide | 0.6 | H₂O₂ | 019 | 20 | 2∼7cP | Ⓞ | Ⓞ | ○ | | | |
| 10 | Tetrafunctional silane | 7.2 | | | Organic solvent | 72 | Metal alkoxide | 06 | CH₃COOH | 019 | 20 | 2∼7cP | Ⓞ | Ⓞ | ○ | ○ | | |
| 11 | Trifunctional silane | 2 | Acrylic acid ester copolymer | 8.7 | Organic solvent | 4 | Metal alkoxide | 03 | | | 16 | 50~300cP | Ⓞ | Δ | ○ | | | |
| 12 | Trifunctional silane | 3.7 | Trifunctional silane | 1.5 | Organic solvent | 9 | Metal alkoxide | 0.31 | | | 20 | 7∼30cP | Ⓞ | Δ | ○ | | | |
| 13 | Trifunctional silane | 0.8 | Polymethyl hydrogen siloxane | 3 | Organic solvent | 10 | Metal alkoxide | 1.2 | | | 9.4 | 8∼16cP | Ⓞ | Δ | ○ | | | |
| 14 | Trifunctional silane | 0.76 | Polymethyl hydrogen siloxane | 1.4 | Organic solvent | 12.5 | Metal alkoxide | 04 | | | 10.2 | 3~5cP | Ⓞ | ○ | | | | |
| 15 | Acrylic ester polymer | 10 | Trifunctional silane | 2.5 | Organic solvent | 0.75 | Metal alkoxide | 0.15 | Ti | 0.1 | | 2000∼3500cP | | | | | Ⓞ | |
| 16 | Acrylic ester polymer | 9 | Trifunctional silane | 3 | Organic solvent | 2 | Metal alkoxide | 0.15 | H2O2 | 01 | | 2500∼4500cP | ○ | | | | ○ | |
| | | | | | | | | | | | | | | | | | | |

### Manufacture of functional materials (coat materials)

In the laboratory owned by the applicant (room temperature 25 °C., humidity 70%), the No. 1 to 16 coating liquid compositions were applied to the cellulose fiber material to produce a functional material. First, a plurality of Japanese papers (washi) were prepared as fiber materials, and the Japanese papers were immersed in each coating liquid composition for 30 seconds. Then, in order to prevent the Japanese papers from being thermally deformed, the Japanese papers was first dried at 60 °C., gradually raised in temperature, and finally raised to 100 °C., to completely dry the Japanese papers to manufacture a functional material (Japanese paper) according to the present invention.

Note that, for example, in the examples, the No. 1 liquid agent can be dried at room temperature (5 °C to 40 °C) after coating the base material (wood). When the surface is dry, it is possible to put it in a dryer at 80 °C to 140 °C for 1 hour. The No. 2 liquid agent can be immersed in a base material (glass fiber), dried for 10 minutes, and then dried at 120 °C. for 60 minutes. Although the liquids agent No. 3 to No. 10 are the same process as No. 1 after coating on the base material, but the temperature may be raised to 80 °C. to 400 °C., depending on the type of base material. Since the liquid agents No. 11, No. 15 and No. 16 are coating agents for a versatile base material using an acrylic ester polymer, it is appropriate to use 5 °C to 140 °C for about 1 hour. It can be determined by the base material. In addition, the liquid agents No. 12 to 14 are liquid agents that form a vitreous film and impart water repellency (without using fluorine) without impairing the characteristics of the flexible base material, and drying is suitable at room temperature to 120 degrees.

Next, the following evaluation experiments were conducted on the manufactured functional materials regarding water repellency, flame retardancy, light transmission, antibacterial / antifouling, air purification, and adhesiveness. Table 1 shows the results with double circles, circles, and triangles, taking into consideration each evaluation result comprehensively. The double circle shows that it was very good, the circle shows that it was good, and the triangle shows that it was a little inferior, respectively.

### (1) Evaluation of light transmission

In the evaluation of light transmission, a coating material (functional material) was manufactured and used for evaluation using in addition to a Japanese paper, a kneaded paper that has been kneaded on Japanese paper, a water-dropped paper that has been patterned by dropping water drops on Japanese paper, a wood chip paper wherein wood chips are collected to make it into paper and a paperboard made of corrugated cardboard.

For the evaluation, each coated material manufactured was illuminated with a light box from below and observed with the naked eye to evaluate gloss, coloration, transparency, etc. As a result, the coating material produced from Japanese paper with this coating liquid composition has a glossy and translucent surface and the Japanese paper used as the material becomes darker, and the white portion of Japanese paper remained white and was glossy and translucent because the coating liquid itself is colorless and transparent, On the other hand, in the comparative coating liquid, the coating liquid itself was yellowish, so that the white portion of the Japanese paper was slightly yellowish and glossy translucent.

(2) With respect to the coat material manufactured from kneaded paper, which was evaluated for mechanical strength and light transmission, it was visually observed whether or not the coat film was detached when it was folded by hand. Then, the hardness (mechanical strength) of each coat film was evaluated. In the case of the coating material produced by using the present coating liquid composition, the surface did not peel off even when the paper was folded. Moreover, it was also found that all Japanese paper airplanes coated with the coating liquid can withstand the wind speed of Mach 7 in JAXA, that is, the high temperature wind tunnel experimental device of 200 degrees on the Kashiwa Campus of the University of Tokyo.

The above results mean that the coating film formed by the present coating liquid composition has high flexibility and an increase in mechanical strength as a whole. This is presumably because the main component (the compound of the Chemical Formula 1) contained in the coating solution, the silane compound(s) added thereto (the compound(s) of the Chemical Formula 2 and/or the Chemical Formula 3), the catalyst, etc. were hydrolyzed and polycondensed on the rubbed paper and came into very fine areas of the rubbed paper (kneaded paper) during the course of formation of the coated layer by polymerization whereupon they were mechanically entangled by a physical bonding to the paper fiber, organic moieties were hydrophobically bonded each other or hydroxyl groups of cellulose which is a main component of the paper were chemically bonded with the silane compound and, as a result, the mechanical strength increased.

Furthermore, at the Tokyo Metropolitan Industrial Technology Research Center, the tensile hardness and tear strength of a handmade Japanese paper obtained by using the liquid agent were measured. As a test method, for the tensile strength test, a constant-speed extension type tensile test (RTF-1250 manufactured by A-End D Co., Ltd.) was used (test piece width: 25 mm, tensile speed: 50 mm / min, grip interval. : 100 mm, number of measurements: 3 times). For the tear strength test, an Elmendorf type tear tester (Yasuda Seiki Seisakusho Co., Ltd. No. 445) was used (measurement number: 5 times).

As a result, compared to the base paper, the tensile strength of the glass coating liquid No. 2 on the base paper sheet was improved by 2.24 times, those of semiconductor No. 3 was improved by 2.25 times, those of No. 5 was improved by 2.18 times, those of titanium oxide. No. 7 of functional expression was improved by 2.4 times. The sheet of liquid preparation of No. 7 had the best values in both vertical and horizontal directions. It was well understood that although it had a photofunctional liquid function, it did not destroy organic matter, the paper was not tattered, and each fiber was firmly protected by a siloxane bond film. As for the tear strength, the flexibility of the uncoated paper is impaired by the curing and solidification of the liquid agent, so that the tear strength decreases in inverse proportion to the tensile strength.

FIG. 1 shows SEM photographs of No. 2, 3, 5, and 7. FIG. 1 (a) shows the base paper, FIG. 1 (b) shows the SEM photograph of No. 2, FIG. 1 (c) shows the SEM photograph of No. 3, FIG. 1 (d) shows the SEM photograph of No. 5, and FIG. 1 (e) shows the SEM photograph of No. 7, respectively. The white part between the fibers is the vitreous material of the space that produces the adhesive function.

### (3) Evaluation of Water Repelling Property

Evaluation of a water repelling property was carried out in accordance with "Water repellency test method for paper and paperboard (JIS-P8137)". First, a test piece of not shorter than 300 mm length and 200 mm width having no fold, wrinkle, unevenness, etc. was prepared according to JIS P 8110 (Method for preparation of test paper) from a coated material manufactured from Japanese paper and then subjected to a pretreatment according to the condition mentioned in JIS P 8111 (Pretreatment of the test paper).

(4) Regarding evaluation of flame retarding property, the coated material manufactured by the invention of the present application is used as a building material such as stained glass, cover and shade for desk lamp etc., protecting material for outer wall and wall paper, shoji paper, etc. for interior decoration. In view of the above, an evaluation was carried out whether it had a flame retarding property requested to building materials. In the flame retarding test, a horizontal firing test and a vertical firing test were carried out as follows in accordance with a UL standard (a standard regulated by the Underwriters' Laboratories organized by the U. S. Fire Insurance Committee concerning fire prevention, electric safety, theft prevention, etc. and an UL-listed label is given to a product which meets with requirements of the UL standard).

In carrying out the firing test, "7.5 g/m2" where 7.5 g of a coating solution were impregnated per 1 m2 of Japanese paper (washi) and "15 g/m2" where 15 g of a coating solution were impregnated per 1 m2 of Japanese paper were manufactured in a method as shown in the above Example and they were cut in a size of 125 ± 5 mm length, 13.0 ± 0.3 mm width and about 0.18 mm thickness to prepare a test piece. In the meanwhile, Japanese paper which was not dipped in any of coating solutions was cut in the same size to prepare a "blank" test piece. Each of those test pieces was subjected to a pretreatment by allowing to stand for 48 hours at the temperature of 23 ± 2°C and the humidity of not higher than 50 ± 5%.

Non-ventilated chamber, enclosure, hood for laboratory, device where methanol of an industrial grade (the lowest purity: 98%) is supplied to a burner of 100 ± 10 mm length and 9.5 ± 0.3 mm inner diameter together with a regulator and a flow meter, clock device (precision: 1 second), manometer having a precision to an extent of 0.01 mm and ring stand having a clamp, etc., for supporting the test piece were prepared and, in a horizontal firing test (according to 94HB of the UL standard), lines were formed at the positions of 25 mm and 100 mm from the firing end of the each of the prepared test pieces.

After that, a 20-mesh wire net in a size of 125 mm × 125 mm was placed at the predetermined height of the ring stand making the surface horizontal and another end of firing ends in the longitudinal direction of the test piece was fixed by a clamp at the height position with a predetermined interval from the upper end of the wire net. The burner was ignited at the position which was far from the test piece, a gas flow, etc. were adjusted so that no yellow flame was formed and the height of the flame became 20 ± 1 mm and the flame of the burner was applied for 30 seconds under such a condition that the flame of the burner covered the position of 6 ± 1 mm from one end of the test piece. When burning of the test piece arrived at the 25 mm line within 30 seconds, the burner was kept away therefrom and, when the burning still continued, the burning time in the horizontal direction from the 25 mm line to the 100 mm line of the test piece was measured for three times.

When the flame retardancy was evaluated as described above, the coat material produced using this coating liquid composition showed good results in the horizontal firing test.

In the vertical firing test (in accordance with the UL Standard 94V-0), the test pieces used in the above horizontal firing test were used. First, a "7.5 g/m2" test piece applied with a noncombustible agent and a "15 g/m2" test piece applied with a noncombustible agent were prepared and an upper end of each of them was fixed by a clamp of the above-mentioned ring stand where the longitudinal direction of the test piece was made vertical. A burner was adjusted so as to make the flame height 20 ± 1 mm and then placed at the position where the upper end of the flame was 10 mm below the center of the edge of the lower end of the test piece and the flame was applied for 10 seconds. After that, the burner was kept away at least 150 mm from the test piece and the first test for the afterflaming time was carried out. When the afterflame ended, the burner was placed again at the position 10 mm below the center of the edge of the lower end, the flame was applied for 10 seconds and the burner was kept away at least 150 mm from the test piece whereupon the second test for the afterflaming time was measured and, at the same time, the aftersmoking time at that time was measured as well.

The above can be summarized as follows. No. 1 can be used mainly as a penetrating type of liquid agent for wood. It produces a trifunctional, highly water-repellent, fine wood surface-bonding film. In coating on paper, etc., the strength of tension, tearing, etc. of the paper is improved by a delicate reaction. No. 2 can be used mainly as a liquid agent for glass fiber. It is possible to form a porous membrane, which is a trifunctional, water-repellent, and extensible modified reaction type liquid agent. No. 3 can be used for semiconductors, metal surface coatings, non-porous films, wood finishes, water and oil resistant paper, etc. It has strong water repellency, oil repellency, and film strength, and forms a flat glass-cured / solidified film on the base material. The base material increases the translucency. No. 4 can be used as a liquid agent having antibacterial properties. A base modifier is added to the No. 2 liquid agent for modification. It is a trifunctional function-generating type of the liquid agent, and by increasing the amount of the polyorganosiloxane composition, a new antibacterial function is generated in the glass coating film. It has a very high translucency. No. 5 is a quaternary + trifunctional additive type of the liquid agent, which gives a degree of freedom to the cured film in a rigid vitrification reaction of the quaternary function. It has a high water repellency and good wear resistance. It has a good adhesion to the film too. The glass-cured / solidified film has rigidity. It has good reactivity with nylon, polyester, and urethane, and produces adhesion. In addition, it is possible to prevent the transfer of dyes such as polyester fibers. No. 6 is a quaternary + trifunctional + acid group modifier addition type of the liquid agent. A liquid agent having a strong and flat reaction film layer with a hardened glass film. The film is rigid and highly translucent. No. 7 is a liquid agent having an adsorption / decomposition function. It is a liquid preparation to which tetrafunctional + trifunctional + additive / trace amount of acetic acid is added. The hardened glass film is strong, but the reaction film is weak in translucency.

No. 8 is a tetrafunctional type of the liquid agent, and the porous reaction membrane is a rigid and hard glass membrane. A reaction film can be formed without a primer when coating PVC. Moreover, by adding a small amount of acetic acid to the No. 8 solution, the reaction bond becomes even denser and the surface strength is improved. Therefore, improvement in the strength of synthetic fibers can be expected. Although not shown in figure, in No. 1, 2, 5, and 11-14 in Table 1 above, the same effect of improving strength was confirmed in the case that it is applied to those containing an adjusting agent as compared with those containing no adjusting agent such as acetic acid. No. 9 is a tetrafunctional type of the liquid agent. By adding H2O2 to No. 8 liquid agent, although it is a hard film layer, the surface film layer forms a smooth crystal structure. No. 10 is a tetrafunctional type of the liquid agent. By adding 0.5 to 2.0% / total weight of CH3COOH to the No. 8 solution, the function of titanium dioxide reacted and synthesized with the organometallic titanium which is catalyst is preserved in the solidified coating film. It is also expressed in bulk flakes (Expression of photocatalytic titanium oxide function). The hardness of the coated solidified film is maximized. No. 11 is a trifunctional application type of the liquid agent. By adding the acrylic acid ester copolymer to the side chain, the surface coating film of the liquid agent becomes smooth, and the liquid agent imparts waterproof performance and barrier properties. It is also effective as an anchor agent, and since the reaction film layer is flexible, it is possible to make paper that can be sewn with a sewing machine by coating on paper. It is also effective as a paper dust inhibitor. Liquids mixed with UV protection agents are expected as outdoor deterioration prevention agents for wood. No. 12 is a trifunctional + bifunctional additive type of the liquid agent. By changing the solvent and adding a functional agent to the side chain functional group, the solidified glass body (the vitrified product) is a liquid agent having appropriate hardness and softness and exhibiting water repellency, slipperiness and oil repellency. It is a liquid agent that uses a platinum compound catalyst in addition to the organometallic titanium catalyst. It is expected to be used for woodwork products and processed paper products. No. 13 is a trifunctional + bifunctional type of the liquid agent. In No. 13, the compounding ratio of No. 12 was changed to develop oil resistance, peelability, and superhydrophobicity. It is non-fluorine and can be environmentally friendly. No. 14 is a trifunctional, solvent-changing type of the liquid agent. The membrane layer of No. 14 is flexible and has strong water repellency. It is a non-fluorine, environmentally friendly water repellent functional agent. No. 15 is a liquid agent containing trifunctional addition type + acrylic ester polymer + titanium powder. No. 16 is a liquid agent of trifunctional + acrylic ester polymer + benzenepropanoic acid + titanium powder. It is a liquid agent that can realize a radiation shielding sheet. It is a liquid agent that can react with OH groups on the surface of metal powder to form a porous and soft coating film. In addition, as an example in which the same effect as the liquid agent of No. 7 can be expected, it is expected that there will be two types of liquids of No. 2 and No. 10, since it is considered that the amount of the organometallic catalyst is doubled and it depends on the addition of acetic acid.

### Example 17

Next, for No. 7, the coating liquid composition of the present invention was cured and solidified to obtain a solidified body. The effect of the functional material was investigated on the solidified body. Specifically, the progress of putting the solidified body into a methylene blue solution is shown by data. The data of applying a liquid agent to paper with a brush and putting a cut piece of paper into a methylene blue solution is also shown. As a result, it was possible to confirm the pigment decomposition of methylene blue in both the glass flakes and the coating sheet.

FIG. 2 is a diagram showing the functionality of the solidified body in one embodiment of the present invention. FIG. 2 (a) shows a photograph of the solidified body (glass flakes) of the present invention. FIG. 2 (b) shows a state in which 3 g of the solidified product of the present invention was immersed in 0.00375 g of methylene blue / 100 g of water (September 27).
FIG. 2 (c) shows the subsequent course of FIG. 2 (b) (October 3). The one on the left (with a white lid) is near the window, and the one on the right (with a yellow lid) is in a locker. FIG. 2 (d) shows the subsequent course of
FIG. 2 (b) (October 9). On the left side, it can be seen that the color of the solution and the solidified body at the bottom is decolorized and becomes transparent due to the influence of sunlight. FIG. 2 (f) shows the sample irradiated with sunlight together with the sample of the retest. In FIG. 2 (g), it can be seen that the one on the left side becomes transparent and the one on the right side is unchanged. From these, it can be seen that it is possible to further advance the reaction and develop functionality by irradiating with visible light or the like. The one on the left has reached transparency and has been further decomposed after adsorption (expression of titanium oxide), but the one on the right has been adsorbed on the solidified body, but it is judged to be adsorption because it is blue. The one on the right is also expected to exert its decomposition function by further light irradiation ((expression of titanium oxide)). Moreover, it was found that the vitrified product (glass solidified body) of No. 7 was used in the retest, and further the paper obtained by applying the No. 7 liquid agent to Japanese paper and drying it was cut into 5 × 20 cm pieces and put into a methylene blue solution, and the decomposition of the titanium oxide function was exhibited in a test after the retest.

The liquid agent No. 7 of an example in one embodiment of the present invention has a structure such as [Chemical formula 1 and [Chemical formula 2], and uses trifunctional silanes and tetrafunctional silanes of oregano alkoxysilanes. By coating the mixture of the liquid agent, the reaction of [Chemical formula 1] first causes a reaction to first form a vitreous thin film on the substrate. After that, it is presumed that the polycondensation reaction of [Chemical formula 2] occurs. At this time, TiO₂ is generated in the liquid by the action of the adjusting agent CH₃COOH, etc. added after mixing the liquid, but the liquid maintains transparency and has low viscosity (2cP to 500cP, No. 7 liquid is 2cP to 30cP), it is possible to provide a stable, easy-to-use coating agent having new photocatalytic titanium oxide functions such as degradability, adsorptivity, and antibacterial property. Further, unlike the conventional photocatalytic titanium oxide powder, it is not necessary to bake at a high temperature, and accordingly it is possible to contribute to the reduction of CO₂ and makes it possible to provide a coating agent that can greatly contribute to environment and can be a stable, safe and inexpensive. Moreover, actually, by 1) Methylene blue experimental diagram (decomposition function), 2) Experimental diagram of coating on deteriorated film for tent (decomposition function) (Fig. 3), 3) Adsorption data of KSP, 4) An antibacterial test data on a coated paper by applying the No. 7 liquid agent (Kanagawa Prefectural Industrial Technology Research Institute, Tonomachi Branch, Research and Development Department, Practical Application Demonstration Project, Photocatalyst Group, Antibacterial and Antiviral Research Group, Antibacterial Laboratory. Evaluation of "antibacterial effect" based on the test result report of [Antibacterial performance evaluation test using bacteria].) and the effect were confirmed, and it was found that all of them exert good functions, that is, decomposition function, adsorption function, antibacterial function, etc.

Note that FIG. 3 is a diagram when an example of the present invention in one embodiment of the present invention is applied to a resin for a tent in a building. Specifically, it is a figure which shows the sunshine effect when the coating liquid composition of this invention is coated. FIG. 3(a) is a photograph showing that the brown coating film is decolorized white by visible light projection one week after the coating, although it is described as light. FIG. 3(b) is a photograph showing that the color of the brown film is shaded in a dark room and remains brown even after one week, although it is described as dark. That is, it can be seen that the color is changed into white and decolorized by sunshine for one week, but the shaded one is unchanged. Although not shown, it was confirmed by high-magnification electron micrographs that when the resin film of the tent was coated, the defective part of the resin was also closed to form a complete film. Therefore, it can be seen that the pollutant remains on the surface and is removed by the photocatalytic reaction. In a general photocatalyst, the titanium oxide particles are supported and coated so as not to come into direct contact with the resin, so that the titanium layer is defective. Although the pollutants in the defective portion are accumulated without being removed, so that the dirt spreads and the photocatalytic function itself is lost, such a problem can be solved according to the present invention.

In addition, a recovery function was also seen to recover the polluted ones. That is, it was found that the composition of the present invention was applied to a tent piece that had been used for a long time and turned brown, and as a result of exposing it to sunlight for one week, the original white color was restored and even minute cracks in the test piece were closed. The complete catalytic effect on the entire surface by covering the surface cleanly was also found.

### Example 18

Next, a liquid agent was prepared by adding 0.0013% of the total weight ratio of the Pt catalyst to the above-mentioned coating liquid (liquid agent) of No. 7 (coating liquid No. 17 (= coating liquid No. 7 + Pt catalyst)). The weights of the mixed components of this coating liquid No. 17 were the same as those of the coating liquid No. 7 except that the Pt catalyst was used. The composition of the coating liquid No. 17 was used to cure and solidify. The effect of the functional material was investigated on the solidified product obtained in the above (FIGs. 4 to 6).

### <Preparation of test pieces>

No. 17 liquid agent was applied to frosted glass (50-100 mm) and dried at 120 ° C for 1 h. As a coating method, frosted glass was immersed in a petri dish containing liquid agent No. 17, and immediately taken out and dried.

Next, the decomposition performance of the solidified body produced using No. 17 was investigated. As a test method, JISR1703-2 wet decomposition performance was measured. According to the standard, the measurement was performed after 3 hours of light irradiation, and then after 24 hours to confirm the change for a longer period of time. After that, it was extended depending on the result. Photocatalysts generate strong oxidizing power when exposed to ultraviolet rays, and have the property of decomposing touched organic substances into carbon dioxide and water. In the photocatalyst JIS test using methylene blue, water in which an organic dye (methylene blue) is dissolved is brought into contact with a test piece coated with a photocatalyst, and the initial absorbance (degree of light absorption) is measured with a spectrophotometer. The amount of change can indicate the performance of the photocatalyst. The light in this case refers to the situation where the ultraviolet rays from the ultraviolet irradiation reaction system are irradiated. The ultraviolet illuminance on the catalyst surface at this time is 10 W / m2. At this time, since the test piece receives not only ultraviolet rays but also visible light, the decomposition of methylene blue is caused by both light rays, and the amount thereof is defined as A. Since it is necessary to see the effect of ultraviolet rays alone, dark conditions are also required. Darkness is a situation in which the ultraviolet rays are not irradiated, and visible light acts as a photocatalyst to decompose methylene blue. Let the amount be B. Then, if the difference between the two (A-B) is taken, the amount of decomposition due to the photocatalytic action of ultraviolet rays can be measured. The blank light is a state in which a sample in which the test piece is not coated with a photocatalyst is irradiated with ultraviolet rays. This measures the amount of decomposition of methylene blue by ultraviolet rays themselves, and the amount of decomposition is defined as C. After all, the net amount of decomposition by the photocatalyst under UV irradiation is the amount of A-B above minus C, but in reality, the amount of C is small, so it can be evaluated by A-B. ..

As samples, (1) frosted glass coated with liquid agent No. 17 Bright conditions 1 and 2 (bright conditions 1 and 2 indicate test specimens 1 and 2 under bright conditions, respectively), (2) frosted glass coated with liquid agent No. 17 Dark conditions 1 and 2 (dark conditions 1 and 2 indicate specimens 1 and 2 under dark conditions, respectively), (3) frosted glass light conditions (blanks 1 and 2 in FIG. 4 (Test specimens 1 and 2 in the blanks)), were used.

If there is a difference between (1) and (2) above, the effect of light irradiation can be confirmed. We also confirmed that (3) there was no change in methylene blue after long-term UV irradiation.

As a result, although a slight decrease in the concentration of methylene blue was observed even under dark conditions, it was found that the concentration of methylene blue decreased significantly under all light conditions for the solidified body using No. 17, and the state of decomposition was observed. confirmed. As described above, it was found that the effect of the excellent functional material is exhibited even in the solidified body using the liquid agent No. 17 in which the Pt catalyst is added in a weight ratio of 0.0013% to the liquid agent No. 7.

### Example 19

In addition, the adsorption performance test of the glass flakes obtained using No. 7 described above was conducted. Since methylene blue can be decomposed by a photocatalyst, the decomposition rate can be measured under ultraviolet irradiation to evaluate the photocatalytic performance. Its performance is expressed by the decomposition activity index R. If the index is 5 or more, it is determined to be photocatalytic.

This time, at the Kanagawa Science Park (KSP), the sample and methylene blue concentration test conditions were made the same as in the normal photocatalytic decomposition test, and the change in methylene blue concentration was measured in a dark place instead of light irradiation. That is, glass flakes made from the liquid agent No. 7 were put into a methylene blue solution having a fixed concentration, and the change in the concentration of methylene blue was measured in a dark place. In this experiment, the methylene blue in the solution is adsorbed on the glass flakes and the concentration of methylene blue in the solution is attenuated. The change in concentration is as shown in FIG 8. As a result of evaluating the decomposition activity index from the change in concentration, a high decomposition activity index of 15.3 nmol / L / min was obtained. It can be said that this high decomposition index indicates the adsorption performance of glass flakes. This experiment revealed that the solution became clear and the glass flakes turned blue.

Furthermore, with respect to the solidified body obtained by using the liquid agent No. 7 according to the above-mentioned manufacturing method, what kind of substance the above-mentioned photocatalytic property is derived from is observed with a transmission electron microscope of the Institute for Solid State Physics, University of Tokyo Kashiwa Campus. went. FIG. 7 is a diagram showing a micrograph of the solidified body (No. 7) in one embodiment of the present invention. K indicates 1000 times, for example, 300K indicates 300,000 times. As a result, nanoparticle dispersion was observed in the photomicrograph of the solidified body obtained by using the liquid agent No. 7 according to the present invention, which showed a photocatalytic function, and some were recognized as anatase-type titanium oxide crystals. Although it cannot be determined to be 100% yet, it is highly possible that it is titanium oxide, and it can be inferred that this caused a photocatalytic effect.

The drawbacks of conventional titanium dioxide (photocatalyst) alone are described below (powder). 1) No effect without the sun (natural) light (ultraviolet light). 2) If it is applied directly to an organic substance, the base material (base) will be decomposed, so a primer will be required, and it will have to be applied repeatedly, such as twice, which will take time and cost. 3) When blended with organic matter, the organic matter is decomposed, so powder cannot be blended directly. 4) It cannot be decomposed unless it is in contact with the powder surface for a certain period of time, and there is only a partial effect on the surface.

In contrast to 1) above, it was found that the functional material (No. 7) of the present invention has the property that adsorption / decomposition by liquid agent coating is effective even in visible light and has an adsorption function even in a dark place. With respect to the above 2), in the functional material (No. 7) of the present invention, the liquid agent special base material is protected from organic decomposition by the siloxane bond film to the base material, and the photocatalytic function is sufficiently exhibited by one surface coating. Therefore, it turned out that the cost was low. In contrast to the above 3), in the functional material (No. 7) of the present invention, the liquid agent is composed of side chain functional groups tri and tetrafunctional groups, it was found that even if the functional agent is incorporated into the opening portion of one of the trifunctional groups, it is not decomposed by the tetrafunctional binding membrane, so that it does not affect the organic functional substances and can be blended. In contrast to the above 4), the functional material (No. 7) of the present invention is transparent, has a low viscosity, has good permeability, and has good drying properties. It was found that the effect is high because the penetrating coating film is formed not only on the surface but also in the Z direction. In addition, bulk glass can be produced from a very thin film with the liquid agent. It is a transparent vitrified body.

Moreover, the discovery of the liquid titanium oxide of the present invention has not been fully elucidated yet, but unlike the conventional photocatalytic titanium oxide, it is not a "particle body" and can be coated anywhere. It can be seen that it is a liquid agent that can be synthesized as a three-dimensional structure like plastic while having the same decomposition performance as titanium oxide, and is very useful.

That is, in the case of titanium as an example, the functional material of the present invention is different from the conventional photocatalytic titanium oxide of powder, and there is no need to attach the powder to the surface with an adhesive, and there is no need to devise an adsorbent underneath. Therefore, it can be said that it is a liquid agent for coating that has a transparent photocatalyst and titanium oxide function that can exhibit both "decomposition performance" and "adsorption performance". Titanium oxide powder is usually a "white powder" and is a photocatalytic titanium oxide that cannot exhibit its function unless it is scattered on the surface. On the other hand, since the functional material of the present invention is a liquid agent that can be applied to everywhere by a siloxane bond reactive group and can exhibit its function, it is significant that the used region of titanium oxide can be greatly expanded.

### Industrial applicability

Since the silane-based coating liquid composition of the present invention can provide materials having various functions at low cost, it can be expected to make a great contribution to industrial development in a wide range of fields.

## Claims

1. A silane-based coating liquid composition **characterized by** comprising the following Chemical Formula [Chemical Formula 1]: 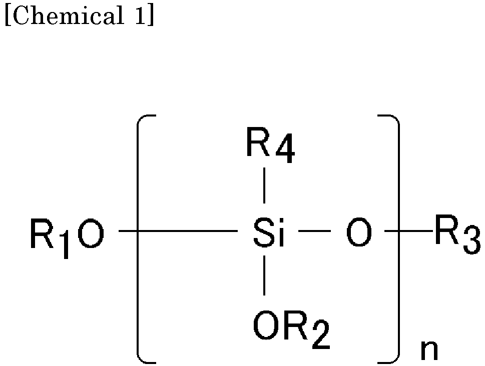 (wherein, in [Chemical Formula 1], R₁, R₂, R₃ and R₄ are hydrogen or an alkyl group having 1 to 4 carbon atoms, which may be the same or different from each other, and n is 2 to 10.) as the main component, a catalyst, a solvent, and an adjusting agent.

2. The composition according to claim 1, wherein the adjusting agent is at least one of hydrogen peroxide, acetic acid, and ammonia.

3. The composition according to claim 1 or 2, wherein the catalyst is an organometallic compound.

4. The composition according to any one of claims 1 to 3, wherein in addition to the main component, the composition comprises a compound represented by the following Chemical Formula [Chemical Formula 2] having three hydrolyzable substituents and one non-hydrolyzable substituent: 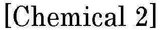 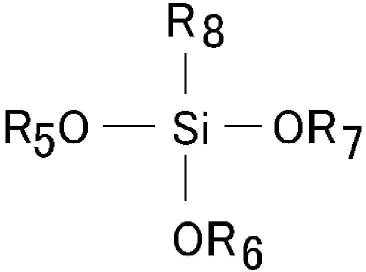 (wherein in [Chemical Formula 2], R₅, R₆ and R₇ may be the same or different from each other, and are monomers composed of hydrogen, alkyl group or alkenyl group, and a bond of R₅O, R₆O and R₇O to Si is an oligomer comprising a siloxane bond, and R₈ is an alkenyl group or a phenyl group which may contain an epoxy group or a glycidyl group in the molecule.).

5. The composition according to any one of claims 1 to 4, wherein in addition to the main component, the composition comprises a compound represented by the following Chemical Formula [Chemical Formula 3] having two hydrolyzable substituents and two non-hydrolyzable substituent: 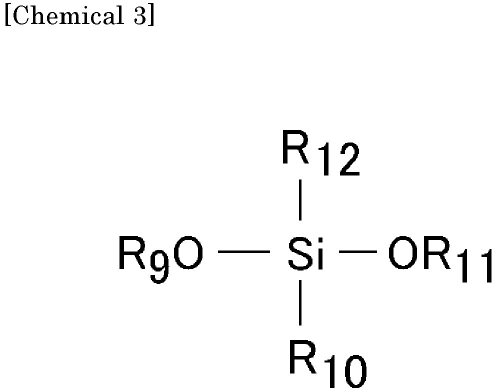 (wherein in [Chemical Formula 3], R₉, and R₁₁ may be the same or different from each other, and are monomers composed of hydrogen, alkyl group or alkenyl group, and a bond of R₉O and R₁₁O to Si is an oligomer comprising a siloxane bond, and R₁₀ and R₁₂ is an alkyl group, an alkenyl group or a phenyl group which may contain an epoxy group or a glycidyl group in the molecule.).

6. The composition according to any one of claims 1 to 5, further comprising an acrylic resin.

7. The composition according to any one of claims 1 to 6, wherein the composition has a decomposition function, an antibacterial function, or an adsorption function.

8. A method of manufacturing functional material **characterized by** comprising a step of applying the silane-based coating liquid composition according to any one of claims 1 to 7 to a base material and a step of drying the base material to which the coating composition is applied.

9. A coating material obtained by applying the silane-based coating liquid composition according to any one of claims 1 to 7 to a substrate.

10. A solidified body obtained by solidifying the silane-based coating liquid composition according to any one of claims 1 to 7.
